# EUROPÄISCHE PATENTSCHRIFT

(11) **EP 1 912 510 B1**
(45) Veröffentlichungstag und Bekanntmachung des Hinweises auf die Patenterteilung: **24.03.2010**
(21) Anmeldenummer: 06776536.2
(22) Anmeldetag: 01.08.2006
(51) Int. Cl.: A22C 13/00

(54) **IMPRÄGNIERTE ODER BESCHICHTETE SCHLAUCHFÖRMIGE NAHRUNGSMITTELHÜLLE AUF CELLULOSEBASIS**
IMPREGNATED OR COATED TUBULAR CELLULOSE-BASED FOOD CASING
ENVELOPPE ALIMENTAIRE TUBULAIRE IMPREGNEE OU ENDUITE A BASE DE CELLULOSE

(30) Priorität: 04.08.2005 DE 102005036688
(43) Veröffentlichungstag der Anmeldung: 23.04.2008
(73) Patentinhaber: Kalle GmbH, 65203 Wiesbaden (DE)
(72) Erfinder: HAMMER, Klaus-Dieter, 55120 Mainz (DE); GORD, Herbert, 55218 Ingelheim (DE); FÖGLER, Jens, 65232 Taunusstein (DE); SEELGEN, Michael, 65510 Idstein (DE); BÜKER, Gert, 56379 Singhofen (DE)
(74) Vertreter: Plate, Jürgen
(86) Internationale Anmeldenummer: PCT/EP2006/007587
(87) Internationale Veröffentlichungsnummer: WO 2007/014747

(56) Entgegenhaltungen:
- DE-A1- 10 360 610
- US-A- 2 289 049
- US-A- 3 539 361
- US-A- 4 171 381
- US-A- 4 500 574

## Beschreibung

Die Erfindung betrifft eine schlauchförmige Nahrungsmittelhülle auf Cellulosebasis, die auf der Innenseite mit einem Mittel behandelt ist, das die Haftung an dem Nahrungsmittel steigert, und/oder auf der Außenseite mit einem Mittel, das eine Cellulase-Resistenz bewirkt. Die Erfindung betrifft daneben ein Verfahren zur Herstellung der so modifizierten Nahrungsmittelhülle sowie deren Verwendung als künstliche Wursthülle.

Schlauchförmige Hüllen auf Cellulosebasis mit einer Imprägnierung oder Beschichtung auf der Innen- und/oder Außenseite sind bereits bekannt. Durch die Imprägnierung bzw. Beschichtung wird die Haftung zwischen der Innenseite der Hülle und der Außenseite des in der Hülle befindlichen Nahrungsmittels den Anforderungen entsprechend eingestellt, d.h. gegenüber einer nicht vorbehandelten Hülle gesteigert oder vermindert.

So ist in der DE-A 37 13 712 eine Hülle aus faserverstärkter Cellulose offenbart, die auf der Innenseite mit einer Mischung aus mindestens einer Haftkomponente und mindestens zwei Trennkomponenten imprägniert ist und dadurch eine besonders geringe Bräthaftung zeigt. Die Haftkomponente und mindestens eine der Trennkomponenten ist mit der Cellulose der Hülle fest verbunden, während mindestens eine weitere Trennkomponente nicht gebunden ist. Die Haftkomponente wird allgemein mit Hilfe eines Vernetzers, wie Glyoxal oder Glutardialdehyd, an die Cellulose gebunden. Sie ist bevorzugt ein pflanzliches oder tierisches Eiweiß, Chitosan, ein Aminoplast-Vorkondensat oder ein Polyamin-Polyamid-Epichlorhydrin-Harz. Bei der gebundenen Trennkomponente handelt es sich bevorzugt um einen Chromfettsäure-Komptex, ein reaktives Silikon oder ein Diketen mit langen, fettähnlichen Alkyl- oder Aralkylresten. Die nicht gebundene Trennkomponente ist beispielsweise Perfluorethylen, Polyethylen, Lecithin oder ein Wachs. Durch eine Beschichtung kann auch die Handhabbarkeit der Hülle verbessert werden, so daß sie sich leichter auf das Füllrohr der Füllmaschine aufschieben läßt.

Eine faserverstärkte Nahrungsmittelhülle auf Basis von regenerierter Cellulose mit einer zumindest auf der Außenseite befindlichen Beschichtung, die die Rauhigkeit erhöht, so daß die Hülle leichter handhabbar wird, ist in der EP-A 287 967 offenbart. Die Beschichtung umfaßt ein wasserunlösliches kationisches Harz und zusätzlich Partikel oder Fasern aus Kunststoff oder Cellulose.

Gegenstand der US 4,171,381 ist eine schlauchförmige Nahrungsmittelhülle, die eine braun gefärbte, auf ein Nahrungsmittel übertragbare Beschichtung aufweist. Die Beschichtung umfaßt eine Mischung aus Albumin, bevorzugt ein Ei-Albumin, und einem Maillard-Reaktionsprodukt aus einer Amino-Verbindung und einem reduzierenden Zucker.

Gegenstand der EP-A 100 056 ist ein für Luftsauerstoff, Wasserdampf und Rauch durchlässiger Cellulose-Faserdarm mit einem Kunststoffüberzug auf der Außenseite, durch den er resistent ist gegen den Angriff von cellulytisch wirkenden Enzymen. Edelschimmel, wie er zur Geschmacksverbesserung von Dauerwürsten verwendet wird, sondert Cellulase und andere cellulytische Enzyme ab, die eine Cellulosehülle mit zunehmender Lagerzeit zersetzen und brüchig werden lassen. Die Hülle läßt sich dann am Ende der Lagerzeit nicht mehr von der Wurstmasse abziehen, ohne abzureißen. Bei den Versuchen, die Einzelteile der Hülle zu entfernen, kann es zur Schädigung der Brätoberfläche kommen, was der Verbraucher als "unappetitlich" ablehnt.

Wurstwaren werden zunehmend in aufgeschnittener Form als sogenannte "Slicer-Ware" verkauft. Vielfach wird die Hülle dabei vor dem Schneiden nicht abgezogen. Die Hülle muß also so stark am Wurstbrät haften, daß sie während des Schneidens nicht von den Wurstscheiben abgedrückt wird, sich aber dennoch gut von den einzelnen Scheiben abschälen läßt. Eine derartige Haftung konnte mit den bisher bekannten Haftimprägnierungen nicht erreicht werden.

Es bestand daher die Aufgabe, eine Nahrungsmittelhülle auf Basis von Cellulose zur Verfügung zu stellen, die eine erhöhte Bräthaftung zeigt. Sie soll zudem praktisch unempfindlich sein gegenüber cellulytisch wirkenden Enzymen (Cellulasen), die von Schimmelpilzen unter ungünstigen Reifebedingungen gebildet werden können. Weiter soll die Hülle möglichst dauerhaft geschmeidig sein.

Gelöst werden diese Aufgaben, wenn auf die Innen- und/oder die Außenseite der Hülle Blutalbumin oder ein Gemisch von Kollagenfasern, insbesondere Kollagenfibrillen, und -hydrolysaten aufgebracht wird.

Gegenstand der vorliegenden Erfindung ist demgemäß eine Nahrungsmittelhülle auf Basis von regenerierter oder gefällter Cellulose, die auf der Innen- und/oder Außenseite eine Imprägnierung oder Beschichtung aufweist, die dadurch gekennzeichnet ist, daß sie Blutalbumin und/oder ein Gemisch von Kollagenfasern und Kollagenhydrolysat umfaßt, wobei das Blutalbumin, die Kollagenfasern und das Kollagen-Hydrolysat durch kovalente Bindungen mit der Cellulose verbunden sind. Das Blutalbumin kann ebenfalls mit Kollagenfasern vermischt sein. Die Hülle ist bevorzugt faserverstärkt. Besonders bevorzugt enthält sie als Faserverstärkung ein naßfestes Faserpapier, speziell ein naßfestes Hanffaserpapier.

Das Kollagenhydrolysat wird beispielsweise durch saure Verkochung oder enzymatische Hydrolyse von Kollagen erhalten. Es hat allgemein ein Molekulargewicht von etwa 3.000 bis 15.000. In warmem Wasser (80 °C) ist es vollständig löslich, zumindest können kolloidale Lösungen daraus erzeugt werden. In einer bevorzugten Ausführungsform ist das Kollagenhydrolysat eine Gelatine mit einer Bloomzahl von 0 bis 280, bevorzugt mit einer Bloomzahl von 0 bis 50. Eine Gelatine mit einer Bloomzahl von 0 ist nicht mehr gelierend. Das Kollagenhydrolysat wie auch das Blutalbumin ziehen tief in die Cellulosehülle ein und lassen diese dauerhaft weich und geschmeidig werden.

Die erfindungsmäße Imprägnierung oder Beschichtung wird unter praxisüblichen Verarbeitungsbedingungen kaum ausgewaschen. Eine besonders starke Verankerung wird dadurch erreicht, daß Blutalbumin, Kollagenfasern und Kollagenhydrolysat fest, d.h. durch kovalente Bindungen, mit der Cellulose verbunden werden. Die Verbindung wird zweckmäßig erreicht durch niedermolekulare Verbindungen mit 2 oder mehr reaktiven Gruppen, die als Vernetzer wirken. Gut geeignet als Vernetzer sind insbesondere aliphatische oder cycloaliphatische Verbindungen mit 2 oder mehr Carbaldehyd-Gruppen, wie Glyoxal, Glutardialdehyd, Bernsteinsäuredialdehyd, Zuckerdialdehyde, epoxidierte Leinöle, Dialkylketene, Citral oder Tannin. Die Vernetzer werden zusammen mit den übrigen Bestandteilen der Imprägnierung oder Beschichtung vermischt aufgetragen. Die beim Trocknen der Hüllen zugeführte Wärme reicht allgemein aus, um eine vollständige Vernetzung zu erreichen. Andere Mittel zum Verbinden der Bestandteile der Imprägnierung oder Beschichtung mit der Cellulose sind prinzipiell anwendbar, beispielsweise Bestrahlen mit energiereicher Strahlung, wie UV-Strahlen oder gamma-Strahlen.

Die Kollagenfasern bzw. -fibrillen bestehen aus Polypeptid-Ketten mit jeweils etwa 1.000 Aminosäuren langen Abschnitten. Jeweils 3 dieser Ketten bilden eine Tripelhelix. Die Fasern können bis zu etwa 250 µm dick sein. Sie haben allgemein eine Länge von bis zu 40 mm, bevorzugt von etwa 0,01 bis 25 mm. In einer 5 gew.-%igen wäßrigen Kochsalzlösung von 15 °C sind die Kollagenfasern praktisch unlöslich. Hergestellt werden die Fasern allgemein aus dem Hautgewebe von Säugetieren, inbesondere von Rindern oder Schweinen, durch Behandeln mit Säure oder Alkali.

Die Menge an imprägnierend wirkenden Substanzen sollte zwischen 80 und 180 mg/m², bevorzugt zwischen 100 und 150 g/m², betragen. Vernetzer, wie Glyoxal, sind darin zweckmäßig in einem Anteil von etwa 2 bis 10 Gew.-%, bevorzugt 3 bis 6 Gew.-%, jeweils bezogen auf das Gewicht der Eiweißkomponente (Blutalbumin, Mischung von Blutalbumin und Kollagenfasern, Mischung von Gelatine und Kollagenfasern) enthalten.

Die erfindungsgemäße Nahrungsmittelhülle auf Basis von Cellulose hat allgemein ein Trockengewicht von etwa 70 bis 150 g/m², bevorzugt von 75 bis 120 g/m². Sie enthält vorzugsweise eine Verstärkung aus einem naßfesten Faserpapier, insbesondere einem naßfesten Hanffaserpapier. Das Papier hat allgemein ein Gewicht von etwa 12 bis 28 g/m², bevorzugt von 15 bis 25 gm².

Hergestellt werden kann die gegebenenfalls faserverstärkte Cellulosehülle nach dem Viskose- oder dem NMMO-Verfahren. Beim Viskoseverfahren wird zunächst eine Bahn aus dem Faserpapier zu einem Schlauch mit überlappenden Längskanten geformt, beispielsweise mit Hilfe einer Formschulter. Der Faserpapierschlauch wird dann von außen, von innen oder von beiden Seiten mit Viskose beschichtet. Der beschichtete Schlauch gelangt dann in ein saures Fällbad, in dem das in der Viskose enthaltene Cellulosexanthogenat zu Cellulose regeneriert wird. Anschließend durchläuft der Gelschlauch noch mehrere Waschbäder, gegebenenfalls auch ein Weichmacherbad. In dem Weichmacherbad befindet sich allgemein eine wäßrige Lösung eines sekundären Weichmachers, wie Glycerin.

In dem NMMO-Verfahren wird anstelle von Viskose eine Lösung von Cellulose in N-Methyl-morpholin-N-oxid(NMMO)-Monohydrat verwendet. Nach dem Beschichten durchläuft der Gelschlauch ein Fällbad, in dem sich eine verdünnte wäßrige NMMO-Lösung befindet. Anschließend wird er in ähnlicher Weise wie im Viskoseverfahren durch mehrere Waschbäder geführt, bis praktisch kein NMMO mehr nachweisbar ist. Auch hier kann der Schlauch zusätzlich durch ein Bad geführt werden, das eine wäßrige Lösung eines sekundären Weichmachers enthält. Der nach dem Viskose- oder dem NMMO-Verfahren auf die beschriebene Weise hergestellte faserverstärkte Schlauch weist keine sichtbare Naht auf. Er wird daher im Zusammenhang mit der vorliegenden Erfindung auch als "nahtlos" bezeichnet. Der Durchmesser, d.h. das Nennkaliber des Schlauchs beträgt allgemein 20 bis 180 mm, bevorzugt 35 bis 150 mm.

Die zum Beschichten der Faserverstärkung verwendete Viskose wie auch die NMMO/Cellulose-Lösung können zusätzlich Additive enthalten. Das sind beispielsweise Polyvinylpyrrolidone, und/oder Alginsäure und/oder Alginat, die gleichzeitig als nicht auswaschbare ("primäre") Weichmacher dienen.

Das Imprägnieren der Cellulosehydrat-Nahrungsmittelhülle mit dem Blutalbumin oder der Mischung von Kollagenfasern und Kollagenhydrolysat kann nach Verfahren erfolgen, die dem Fachmann an sich bekannt sind. Um die Innenseite zu beschichten, kann beispielsweise eine entsprechende Lösung oder Dispersion in das Innere eingefüllt und in einer kontinuierlich neu gebildeten Schlaufe stationär gehalten werden (sog. "slug-coating"). Zur Imprägnierung bzw. Beschichtung der Außenseite kann die Lösung oder Dispersion auf den flachgelegten Schlauch mit Hilfe eines Walzenantragswerks aufgebracht werden. Die Imprägnierung sollte in jedem Fall erfolgen, solange die Cellulosehydrathülle sich noch im Gelzustand befindet, also bevor sie das erste Mal getrocknet wird.

Die zum Imprägnieren oder Beschichten der Innen- oder Außenseite eingesetzten wäßrigen Lösungen oder Dispersionen enthalten allgemein 2 bis 20 Gew.-%, bevorzugt 3 bis 6 Gew.-%, an nicht-wäßrigen Inhaltsstoffen.

Zusätzlich zu der Blutalbumin bzw. Kollagenfasern und -hydrolysat enthaltenden Imprägnierung oder Beschichtung kann die erfindungsgemäße Nahrungsmittelhülle noch weitere Imprägnierungen und/oder Beschichtungen auf der Innen- oder Außenseite aufweisen. Ist nur die Innenseite mit der Blutalbumin bzw. Kollagenfasern und -hydrolysat enthaltenden Haftimprägnierung versehen, wird die Außenseite zweckmäßig fungizid imprägniert. Das ist besonders wichtig, wenn die Hülle zur Herstellung von (nicht schimmelgereifter) Dauerwurst eingesetzt werden soll. In einer anderen Ausführungsform kann sich auf der Außenseite eine Beschichtung befinden, die für Wasserdampf und/oder Sauerstoff weitgehend undurchlässig ist, beispielsweise eine PVDC-Beschichtung. Die erfindungsgemäße Hülle kann schließlich auch mit Flüssigrauch imprägniert sein, der während der Lagerung bzw. der Reifung der Wurst in das Wurstbrät diffundiert und diesem Rauchgeschmack, Rauchfarbe und/oder Raucharoma verleiht.

Geeignet ist die erfindungsgemäße Hülle als künstliche Wursthülle, insbesondere für Brühwurst oder Dauerwurst, wie Salami. Würste in einer Hülle mit einer erfindungsgemäßen Außenimprägnierung zeigen auch nach mehrmonatiger Lagerung keine Veränderung. Das gilt selbst für schimmelgereifte Dauerwürste. Bei diesen Würsten waren keine Beschädigungen der Cellulose durch cellulytisch wirkende Enzyme (Cellulasen), die von den Schimmelpilzen gebildet wurden, festzustellen. Hüllen, die innen und außen in der beschriebenen Weise imprägniert sind, zeigen die gewünschte Haftung am Wurstbrät und gleichzeitig eine hohe Resistenz gegen Cellulasen.

Die nachfolgenden Beispiele dienen zur Illustration der Erfindung. Prozente sind darin Gewichtsprozente, soweit nicht anders angegeben oder aus dem Zusammenhang unmittelbar ersichtlich.

### Beispiel 1

Ein Faser-Gelschlauch vom Kaliber 105 wurde nach dem Verlassen der Glycerinkufe innen mit einer wäßrigen Lösung imprägniert, die

| | |
|---|---|
| 4 % | Blutplasmaprotein (75 PSC - Spraydried Porcine-Plasmapowder von VEOS, B-8750 Zwevezele, Belgien) |
| 3 % | Glyoxal (bezogen auf das Blutplasmaprotein) und |
| 3 % | Glycerin |

enthielt. Der Gelschlauch wurde wie üblich zwischen 2 Quetschwalzenpaaren im aufgeblasenen Zustand mit Heißluft auf einen Feuchtegehalt von 8 bis 12 % getrocknet. Die Protein-Auftragsmenge betrugt 120 mg/m². Der Schlauch wurde mit Wasser auf 16 bis 18 % befeuchtet, gerafft und mit Fleischwurstbrät gefüllt. Die Hülle haftete sehr stark und gleichmäßig an der Wurstoberfläche, so daß sie sich in Scheiben schneiden ließ, ohne daß sie sich vom Brät ablöste.

### Beispiel 2

Ein außenviskosierter Faser-Gelschlauch vom Kaliber 75 wurde nach dem Verlassen der Glycerinkufe auf der Innenseite mit einer 3 %igen wäßrigen Lösung einer Mischung aus

| | |
|---|---|
| 60 Gt | Kollagenfasern, |
| 40 Gt | Kollagenhydrolysat (eine 20 %ige wäßrige Lösung des Kollagenhydrolysats hatte bei 20 °C eine dynamische Viskosität von 25 ± 5 mPa s) |
| 4 Gt | Glyoxal und |
| 3 Gt | Glycerin |

imprägniert. Der Schlauch wurde wie üblich zwischen zwei Quetschwalzenpaaren in aufgeblasenem Zustand mit Heißluft auf einen Feuchtegehalt von 10 bis 12 % getrocknet und aufgewickelt. Danach wurde er auf 16 bis 18 % angefeuchtet und gerafft. Einige Raupen wurden mit Fleischwurstbrät gefüllt, andere mit Dauerwurstbrät. Nach dem Brühen, Räuchern und Abkühlen der Fleischwurst haftete die Hülle so fest, daß sie sich auch nicht stellenweise ablöste. Die Haftung bei Dauerwurst lag nach einer Reifedauer von 4 Wochen 0,5 % über der bisher höchsten Haftung mit üblichen Imprägnierungen, nämlich bei 3,0 statt bei 2,5 (für außenviskosierte Faserdärme; Bewertungsmaßstab von 1 bis 5).

### Beispiel 3

Es wurde ein mit einer Faserpapiereinlage verstärkter Cellulosehydrat-Gelschlauch (Viskoseverteilung: 60 % innen, 40 % außen) hergestellt, der nach dem Verlassen der Glycerinkufe flachgelegt wurde und auf dessen Außenseite dann mit einem Walzenantragswerk eine wäßrige Lösung mit folgenden Inhaltsstoffen aufgetragen wurde:

| | |
|---|---|
| 4 % | Blutalbumin (®Vepro 75 PSC) |
| 3 % | Glyoxal (der Anteil ist bezogen auf das Gewicht des Albumins) und |
| 3 % | Glycerin |

Vor dem Trocknereinlauf wurde dann in das Innere des Schlauchs eine übliche Polyamin-Polyamid-Epichlorhydrin-Verankerungslösung eingebracht. Der Schlauch wurde dann in an sich bekannter Weise im aufgeblasenen Zustand zwischen zwei Quetschwalzenpaaren mit Heißluft getrocknet bis er einen Feuchtegehalt von etwa 8 bis 12 % aufwies. Anschließend wurde er mit einer Polyvinylidenchlorid(PVDC)-Dispersion innenbeschichtet. Der auf diese Weise erhaltene Schlauch war weich und geschmeidig.

### Beispiel 4

Ein mit Cellulosehydrat-Gelschlauch mit einer Faserpapierverstärkung, wie im Beispiel 3 näher spezifiziert, wurde auf der Außenseite mit Hilfe eines Walzenantragswerks imprägniert mit einer Lösung der im Beispiel 3 genannten Zusammensetzung. Der Schlauch wurde danach auf der Innenseite mit einer üblichen Haftimprägnierung versehen. Diese bestand aus 40 % Casein, Glyoxal und ®Softenol. Nach dem Trocknen, Befeuchten und Raffen war das Material sehr geschmeidig und cellulase-resistent.

Raffraupen aus dem genannten Material wurden mit Dauerwurstbrät gefüllt. Auch nach mehrmonatiger Reifung der Würste war die Hülle nicht durch die Einwirkung von Cellulasen geschädigt. Sie ließ sich zudem gut abschälen, d.h. sie riß beim Abschälen nicht ab.

## Patentansprüche

1. Nahrungsmittelhülle auf Basis von regenerierter oder gefällter Cellulose, die auf der Innen- und/oder Außenseite eine Imprägnierung oder Beschichtung aufweist, **dadurch gekennzeichnet, daß** die Imprägnierung oder Beschichtung Blutalbumin und/oder ein Gemisch von Kollagenfasern und Kollagenhydrolysat umfaßt, wobei das Blutalbumin, die Kollagenfasern und das Kollagenhydrolysat durch kovalente Bindungen mit der Cellulose verbunden sind.

2. Nahrungsmittelhülle gemäß Anspruch 1, **dadurch gekennzeichnet, daß** die Imprägnierung oder Beschichtung eine Mischung von Blutalbumin und Kollagenfasern umfaßt.

3. Nahrungsmittelhülle gemäß Anspruch 1 oder 2, **dadurch gekennzeichnet, daß** die Hülle faserverstärkt ist, bevorzugt mit einem naßfesten Faserpapier, besonders bevorzugt mit einem naßfesten Hanffaserpapier.

4. Nahrungsmittelhülle gemäß einem oder mehreren der Ansprüche 1 bis 3, **dadurch gekennzeichnet, daß** das Kollagenhydrolysat eine Gelatine mit einer Bloomzahl von weniger als 280, bevorzugt von 0 bis 50, ist.

5. Nahrungsmittelhülle gemäß einem oder mehreren der Ansprüche 1 bis 4, **dadurch gekennzeichnet, daß** die Kollagenfasern eine Länge von weniger als 40 mm, bevorzugt von 0,01 bis 25 mm, aufweisen.

6. Nahrungsmittelhülle gemäß einem oder mehreren der Ansprüche 1 bis 5, **dadurch gekennzeichnet, daß** die Verbindung zwischen dem Blutalbumin, den Kollagenfasern, dem Kollagenhydrolysat und der Cellulose durch niedermolekulare Vernetzer mit 2 oder mehr reaktiven Gruppen, bevorzugt durch aliphatische oder cycloaliphatische Verbindungen mit 2 oder mehr Carbaldehyd-Gruppen, bewirkt wird.

7. Nahrungsmittelhülle gemäß einem oder mehreren der Ansprüche 1 bis 6, **dadurch gekennzeichnet, daß** die Menge an Blutalbumin oder der Mischung von Kollagenfasern und -hydrolysat zwischen 80 und 180 mg/m², bevorzugt zwischen 100 und 150 g/m², beträgt.

8. Nahrungsmittelhülle gemäß einem oder mehreren der Ansprüche 1 bis 7, **dadurch gekennzeichnet, daß** der Anteil an Vernetzer 2 bis 10 Gew.-%, bevorzugt 3 bis 6 Gew.-%, beträgt, jeweils bezogen auf das Gewicht der Eiweißkomponente(n).

9. Verfahren zur Herstellung der Nahrungsmittelhülle gemäß einem oder mehreren der Ansprüche 1 bis 8, **dadurch gekennzeichnet, daß** es die folgenden Schritte umfaßt:
- Bereitstellen einer Nahrungsmittelhülle auf Basis von regenerierter oder gefällter Cellulose, in der sich die regenerierte oder gefällte Cellulose bevorzugt noch im Gelzustand befindet,
- Aufbringen einer wäßrigen Zubereitung, die Blutalbumin oder eine Mischung von Kollagenfasern und -hydrolysat umfaßt, wobei der wäßrigen Zubereitung mindestens ein niedermolekularer Vernetzer zugemischt wird, auf eine oder beide Seiten der Nahrungsmittelhülle und
- Trocknen der Nahrungsmittelhülle.

10. Verfahren gemäß Anspruch 9, **dadurch gekennzeichnet, daß** dem Blutalbumin Kollagenfasern zugemischt werden.

11. Verwendung der Nahrungsmittelhülle gemäß einem oder mehreren der Ansprüche 1 bis 8 als künstliche Wursthülle, bevorzugt für Brühwurst oder Dauerwurst, besonders bevorzugt für Salami.

## Claims

1. A food casing based on regenerated or precipitated cellulose which has on the inside and/or outside an impregnation or coating which comprises blood albumin and/or a mixture of collagen fibers and collagen hydrolyzate, the blood albumin, the collagen fibers and the collagen hydrolyzate being bound to the cellulose by covalent bonds.

2. The food casing as claimed in claim 1, wherein the impregnation or coating comprises a mixture of blood albumin and collagen fibers.

3. The food casing as claimed in claim 1 or 2, wherein the casing is fiber reinforced, preferably with a wet-strength fiber paper, particularly preferably with a wet-strength hemp fiber paper.

4. The food casing as claimed in one or more of claims 1 to 3, wherein the collagen hydrolyzate is a gelatin having a bloom number of less than 280, preferably from 0 to 50.

5. The food casing as claimed in one or more of claims 1 to 4, wherein the collagen fibers have a length of less than 40 mm, preferably from 0.01 to 25 mm.

6. The food casing as claimed in one or more of claims 1 to 5, wherein the bonding between the blood albumin, the collagen fibers, the collagen hydrolyzate and the cellulose is effected by low-molecular-weight crosslinkers having 2 or more reactive groups, preferably by aliphatic or cycloaliphatic compounds having 2 or more carbaldehyde groups.

7. The food casing as claimed in one or more of claims 1 to 6, wherein the amount of blood albumin or of the mixture of collagen fibers and collagen hydrolyzate is between 80 and 180 mg/m², preferably between 100 and 150 g/m².

8. The food casing as claimed in one or more of claims 1 to 7, wherein the fraction of crosslinker is 2 to 10 % by weight, preferably 3 to 6 % by weight, in each case based on the weight of the protein component(s).

9. A method of producing the food casing as claimed in one or more of claims 1 to 8, which comprises the following steps:
- providing a food casing based on regenerated or precipitated cellulose in which the regenerated or precipitated cellulose is preferably still in the gel state,
- applying an aqueous preparation which comprises blood albumin or a mixture of collagen fibers and collagen hydrolyzate, at least one low-molecular-weight crosslinker being added to the aqueous preparation, to one or both sides of the food casing and
- drying the food casing.

10. The method as claimed in claim 9, wherein collagen fibers are added to the blood albumin.

11. The use of the food casing as claimed in one or more of claims 1 to 8 as artificial sausage casing, preferably for scalded-emulsion sausage or long-life sausage, particularly preferably for salami.

## Revendications

1. Enveloppe alimentaire à base de cellulose régénérée ou précipitée, qui présente sur la face intérieure et/ou extérieure une imprégnation ou une enduction, **caractérisée en ce que** l'imprégnation ou l'enduction comprend de l'albumine sanguine et/ou un mélange de fibres collagènes et d'hydrolysat collagène, l'albumine sanguine, les fibres collagènes et l'hydrolysat collagène étant combinés à la cellulose par des liaisons covalentes.

2. Enveloppe alimentaire selon la revendication 1, **caractérisée en ce que** l'imprégnation ou l'enduction comprend un mélange d'albumine sanguine et de fibres collagènes.

3. Enveloppe alimentaire selon les revendications 1 ou 2, **caractérisée en ce que** l'enveloppe est renforcée par des fibres, de préférence avec un papier de fibres résistant à l'humidité, mieux encore avec un papier de fibre de chanvre résistant à l'humidité.

4. Enveloppe alimentaire selon l'une ou plusieurs des revendications 1 à 3, **caractérisée en ce que** l'hydrolysat collagène est une gélatine avec un nombre de bloom inférieur à 280, de préférence compris entre 0 et 50.

5. Enveloppe alimentaire selon l'une ou plusieurs des revendications 1 à 4, **caractérisée en ce que** les fibres collagènes présentent une longueur inférieure à 40 mm, de préférence comprise entre 0,01 et 25 mm.

6. Enveloppe alimentaire selon l'une ou plusieurs des revendications 1 à 5, **caractérisée en ce que** la combinaison entre l'albumine sanguine, les fibres collagènes, l'hydrolysat collagène et la cellulose est réalisée par des réticulants à faible poids moléculaire comprenant 2 ou plus de deux groupes réactifs, de préférence par des combinaisons aliphatiques ou cycloaliphatiques avec 2 ou plusieurs groupes carbaldéhyde.

7. Enveloppe alimentaire selon l'une ou plusieurs des revendications 1 à 6, **caractérisée en ce que** la quantité d'albumine sanguine ou du mélange de fibres collagènes et d'hydrolysat collagène est comprise entre 80 et 180 mg/m², de préférence entre 100 et 150 g/m².

8. Enveloppe alimentaire selon l'une ou plusieurs des revendications 1 à 7, **caractérisée en ce que** la proportion en réticulants est comprise entre 2 et 10% en poids, de préférence entre 3 et 6% en poids, rapportée dans chaque cas au poids de la(des) composante(s) protéique(s).

9. Procédé pour la préparation de l'enveloppe alimentaire selon l'une ou plusieurs des revendications 1 à 8, **caractérisé en ce qu'**il comprend les étapes suivantes :
- préparation d'une enveloppe alimentaire à base de cellulose régénérée ou précipitée dans laquelle la cellulose régénérée ou précipitée se trouve de préférence encore à l'état de gel,
- Application d'une préparation aqueuse, qui comprend de l'albumine ou un mélange de fibres collagènes et d'hydrolysat collagène, la préparation aqueuse étant au moins mélangée à un réticulant à faible poids moléculaire, sur l'une ou sur les deux faces de l'enveloppe alimentaire, et
- Séchage de l'enveloppe alimentaire.

10. Procédé selon la revendication 9, **caractérisé en ce que** des fibres collagènes sont mélangées à de l'albumine sanguine.

11. Utilisation de l'enveloppe alimentaire selon l'une ou plusieurs des revendications 1 à 8 comme enveloppe de saucisse artificielle, de préférence pour de la saucisse à bouillir ou du saucisson sec, en particulier, mieux encore pour du salami.
